# EUROPEAN PATENT SPECIFICATION

(11) **EP 1 627 850 B1**
(45) Date of publication and mention of the grant of the patent: **26.03.2008**
(21) Application number: 05016913.5
(22) Date of filing: 04.08.2005
(51) Int. Cl.: B67D 3/04, F16K 35/10, F16L 37/28

(54) **Connector for delivering taps**
Verbindungsanordnung für Zapfgeräte
Raccord pour robinet distributeur

(30) Priority: 18.08.2004 IT TO20040572
(43) Date of publication of application: 22.02.2006
(73) Proprietor: Vitop Moulding S.R.L., 15100 Alessandria (IT)
(72) Inventor: Nini, Diego, 15100 Alessandria (IT)
(74) Representative: Garavelli, Paolo

(56) References cited:
- US-A- 5 775 364

## Description

The present invention refers to a connector for delivering taps, particularly for taps adapted to be applied on vessels for liquids (typically wine) of the so-called "bag in box" type.

US-A-5775364 discloses a connector according to the preamble of Claims 1-2.

Such vessels are generally composed of a cardboard box inside which a bag is placed which is adapted to store the liquid to be delivered. The taps are applied to the bag and the consumer, after having purchased the package, obtains an opening in the external cardboard box, makes the tap go out of it, breaks the warranty seal, if present, and actuates the tap through a finger pressure, or by activating, always with his fingers, a wing-shaped opening mechanism, for delivering the liquid.

When it is necessary to delivery liquid continuously, for example in shops where wine (or other liquids, such as fruit juices, concentrates, etc.) is delivered, the prior art provides for the use of connectors which are not applied to taps which keep them constantly open, allowing to deliver liquid towards the distribution pipes arranged downstream of the connectors themselves, also through pump systems connected to the connector.

These connectors however are not satisfactory and have the following problems:
a) they are first of all composed of a great number of parts, providing, in a normal configuration, a pouring device, a ring of the O-ring type for sealing the pouring device, an internal check valve for liquid when the system is in its "rest" position, a pushing spring of such valve, 3 rings of the O-ring type for sealing the valve, a body, an opening knob with related pushing plug and another spring which cooperates with the opening knob: such configuration is costly and above all complex to assemble;
b) the internal check valve, after a prolonged use or with some types of liquids, gets dirty and must be cleaned by the end user: this operation is difficult when disassembling, when it is necessary to detach from the connector body all components contained therein, and still more difficult, and sometimes impossible, when re-assembling, when the user, not remembering the mutual coupling of the component parts, is no more able to put them back together. Moreover, the various parts, and above all the O-rings, are involuntarily ruined or worn;
c) the presence of up to four sealing rings is an index of potential connector leakages and its difficult coupling with the tap;
d) the check valve is configured in such a way as to allow a not completely satisfactory liquid output flow for the end user needs; moreover, the spring which cooperates with the pouring device is abutted, inside the pouring device itself, on a cross-shaped support placed next to the liquid delivering opening and such support is a further obstacle and limit against liquid flowing out;
e) the connector configuration is such as to allow it to have an efficient bending-preventing action during use: in fact, it tends to be longitudinally bent upon its coupling with the tap, with the risk of being broken;
f) the small plug driving the tap opening has its contact surface with the tap curved in order to be equal to the recess with which the tap opening pusher is equipped: this allows an accurate contact between small plug and tap, but then it limits its pushing stroke when opening, and above all the opening stroke of the tap itself;
g) during the disconnection of the pipe from the pouring member, this latter one goes out of its seat, ruining without remedy the sealing thread and its related O-ring.

Object of the present invention is solving the above prior art problems, by providing a connector which, referred to the above-mentioned problems, has the following advantages:
a) first of all, it is composed of a very reduced number of parts, removing all four sealing rings and, in a preferred configuration thereof, also removing the spring which cooperates with the internal valve: this obviously results in an inexpensive and easy to assemble connector;
b) the internal check valve is easy to be removed for its cleaning, both in the version with separate spring, and above all in its version with an elastic pushing member integrated therewith;
c) the connector seal in the four critical points is guaranteed by the geometric configuration of check valve and pouring member, and by their mutual operating contact relationship;
d) the check valve is equipped with four openings whose width has been increased with respect to the previous ones, to allow a quite satisfactory liquid output flow for all end user needs; moreover, in its version with spring, it directly abuts on the pouring member walls and the prior art cross-shaped support is thereby removed. Still more, the chamber that is formed between pouring member and body, where the valve slides, has been increased in width, in order to increase the passing flow;
e) the connector has been reinforces in the body part subjected to bending during use;
f) the small plug driving the tap opening has the contact surface with the tap straightened and enlarged, in order to allow a contact on a greater recess surface with which the tap opening pusher is equipped: this allows highly increasing the pushing force when opening the tap, since, in the prior art connector, the maximum tap opening stroke was not adequately exploited; to increase the pusher descent stroke, the cam section which is obtained inside the ring nut has been increased;
g) due to the small plate obtained above the hexagonal geometry of the pouring member, the force is discharged on the whole diameter in the coupling area between body and pouring member, not stressing any more the threading and solving also this type of problem.

The above and other objects and advantages of the invention, as will appear from the following description, are reached by a connector as disclosed in claims 1 and 2. Preferred embodiments and non-trivial variations of the present invention are the subject matter of the dependent claims.

The present invention will be better described by some preferred embodiments thereof, provided as a nonlimiting example, with reference to the enclosed drawings, in which:
- Figure 1 is a perspective view of a first embodiment of the connector according to the present invention;
- Figure 2 is a rear view of the connector of Fig. 1;
- Figure 3 is a sectional view obtained along line A-A in Fig. 2;
- Figure 4 is an exploded side view of the connector of Fig. 1;
- Figure 5 is a perspective view of the inventive check valve which can be applied to the connector of Fig. 1;
- Figure 6 is a front view of the valve of Fig. 5;
- Figure 7 is a sectional view obtained along line A-A in Fig. 6;
- Figure 8 is a detailed sectional view of the coupling of internal body parts of the vessel of Fig. 1 in its operating position;
- Figure 8A is a comparison of the operating areas of the known pushing member and of the inventive one;
- Figure 8B is a perspective view of the inventive knob 11;
- Figure 8C is a sectional view performed along line C-C in Fig. 8B that shows the cam arrangement inside the inventive knob;
- Figure 9 is a sectional view of a second embodiment of the connector of the present invention;
- Figure 10 is a side exploded view of the connector of Fig. 9;
- Figure 11 is a perspective view of the inventive check valve which can be applied to the connector of Fig. 9;
- Figure 12 is a front view of the valve of Fig. 11;
- Figure 13 is a sectional view obtained along line A-A in Fig. 12; and
- Figure 14 is a detailed sectional view of the coupling of internal body parts of the vessel of Fig. 9 in its operating position.

With reference to the Figures, a preferred embodiment of the connector of the present invention is shown and described. It will be immediately obvious to the skilled people in the art that numerous variations and modifications (for example related to shape, sizes and parts with equivalent functionality) can be performed to the described connector, without departing from the scope of the invention as appears from the enclosed claims.

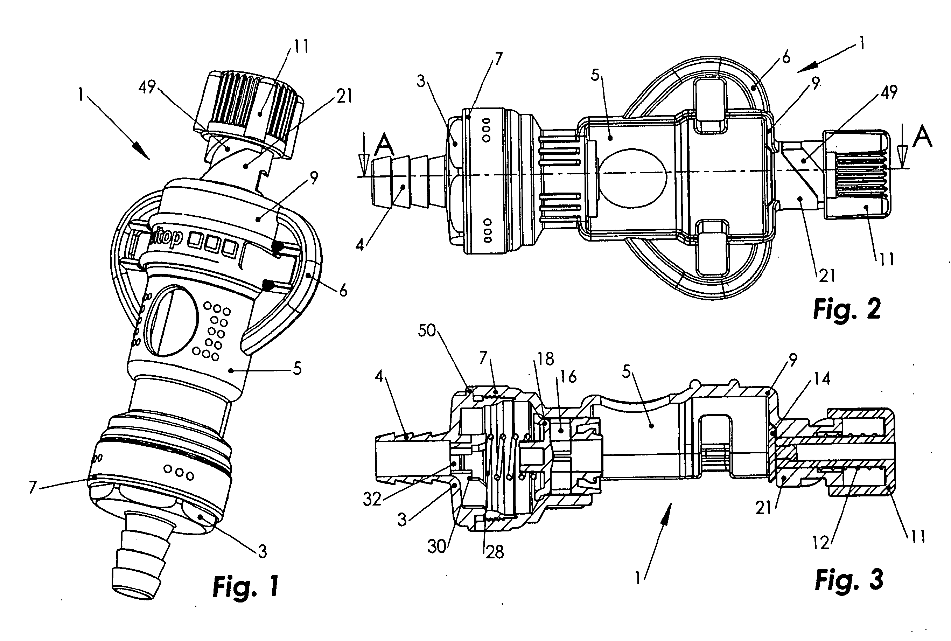

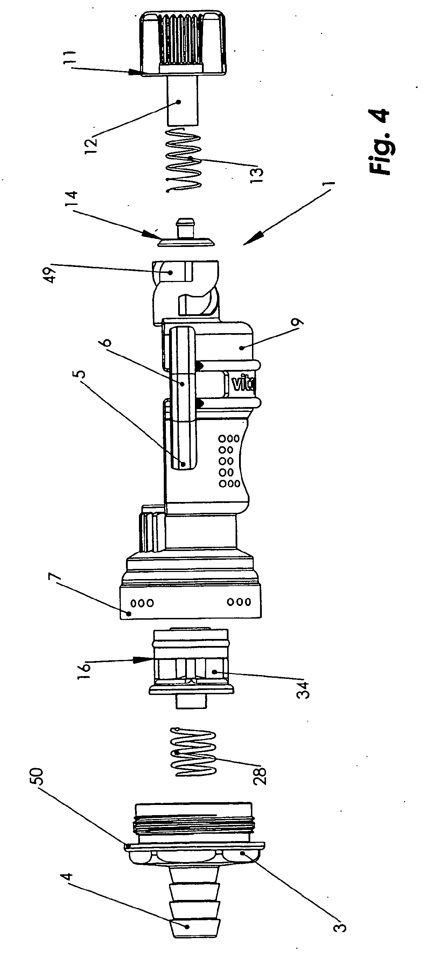

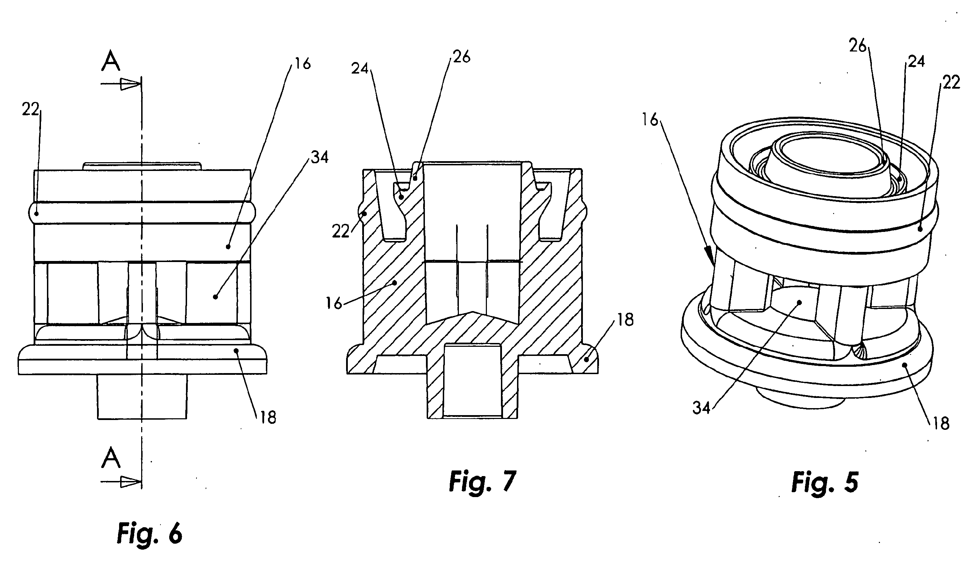

According to a first preferred configuration of the present invention, shown in Figures 1 to 8, the connector 1 of the invention first of all comprises a pouring member 3 equipped with a corresponding fitting 4, adapted for connecting to downstream piping or devices.

Il connector 1 further comprises an elongated body 5 connected at one end 7 to the pouring member 3 and adapted, at the opposite end 9, to engage a known delivering tap (not shown) for opening it; this occurs through two arms 6 inside which, in a known way, the tap wings are abutted in order to be able to pull it upwards through the arms 6 when opening the tap itself.

The connector 1 then comprises a knob 11 connected to the end 9 of the body 5 and adapted to allow opening the tap engaged by the connector 1 through a movement guided by a cam 49 placed on the neck 21 of the body 3; the knob 11 is equipped with a cylindrical end 12 around which a first spring 13 is placed, and the cylindrical end 12 ends in a pushing member 14 adapted to push the tap in an opening position by overcoming the spring 13 force.

The main innovative member of the connector 1 of the invention is thereby a check valve 16 placed inside the body 5: such check valve 16 is equipped with a circular end 18 adapted to engage a corresponding internal wall 20 of the pouring member 3 for performing the liquid seal between pouring member 3 and valve 16. The circular end 18 then replaces the first prior art sealing ring of the O-ring type.

The valve 16 is further equipped with three integral shaped projections 22, 24, 26 adapted to operate as liquid sealing gaskets when opening and/or removing the tap from the connector 1, replacing the other three prior art sealing rings of the O-ring type.

In order to realise a valve 16 of this type, formed in a single piece and made of a single material, various known moulding processes, including the co-moulding process, can be used.

The vessel 1 finally comprises at least one second spring 28 for pushing the check valve 16 adapted to push the valve 16 itself in its closing position on the pouring member 3 and adapted to prevent liquid from going out of the connector 1 when removing the tap from the connector 1.

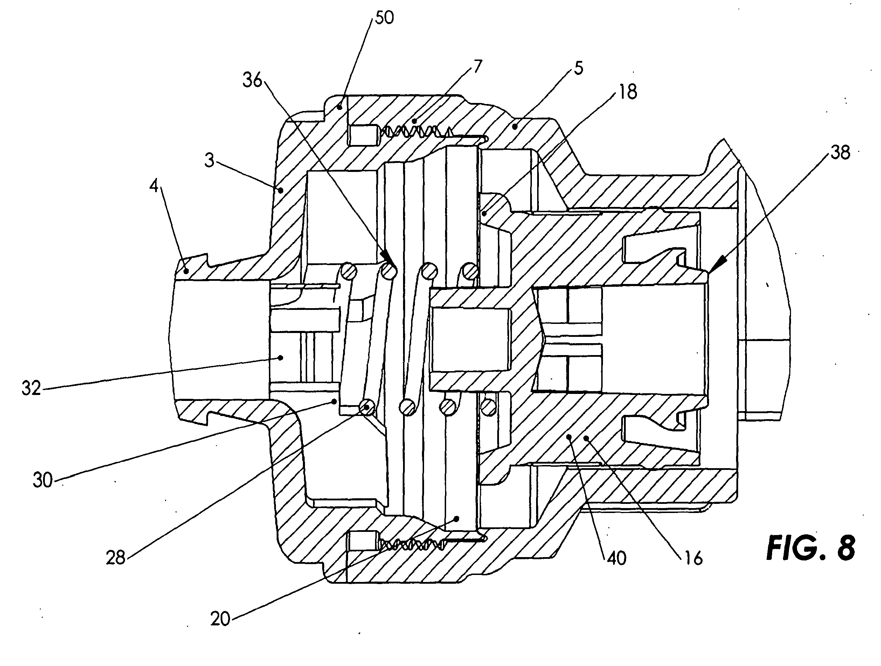

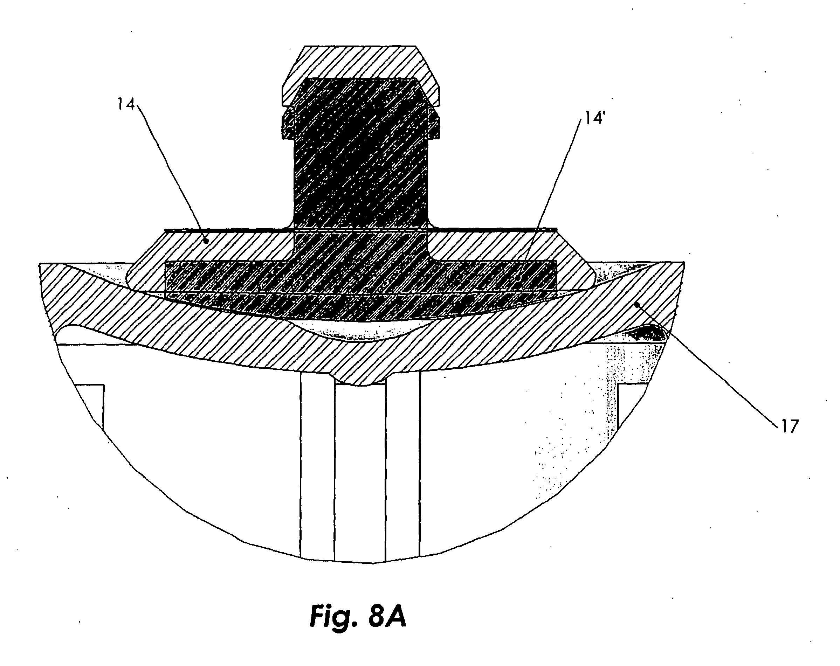

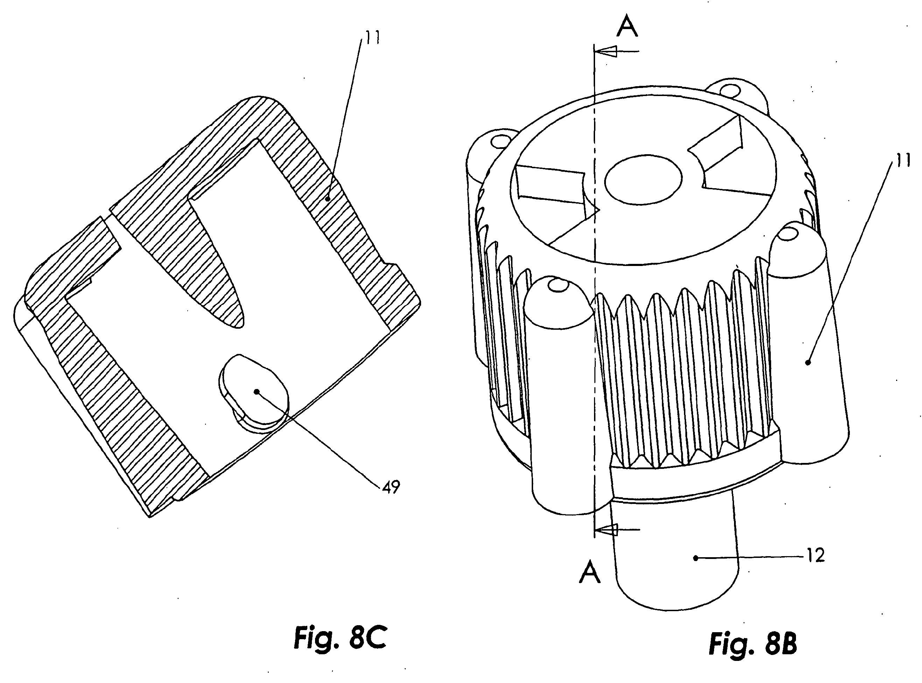

The operating situation that provides the connector 1 opening according to its first configuration is shown in Fig. 8: here, the compression point of the spring 28 (point 36), the tap pushing point (point 38) and the opening position of valve 16 channels (point 40) can be noted.

In particular, but not in a limiting way, the pushing member 14 is composed of a small plug 14 whose operating pushing area is greater than the corresponding tap opening recess in order to allow a greater push, and above all a longer stroke when opening the tap itself.

The most efficient action exerted by the inventive pushing member 14 can be better seen in Fig. 8A, which shows a comparison between the operating pushing area of a known member 14' and the one of the inventive member 14 on the cover 17 of the connected tap: it is clearly seen that the member 14 performs a wider push on the cover 17, finally realising a longer opening stroke of the tap itself.

Moreover, the second spring 28 abuts onto the pouring member 3 on corresponding projections 30 obtained next to the outlet orifice 32 of the pouring member 3.

Still more, in order to allow a greater liquid delivery, the check valve 16 is equipped with a plurality of liquid outlet channels 34 whose opening is greater that the previously-known ones.

Moreover, as better shown in Fig. 8B and 8C, in order to increase the pusher descent stroke, the section of the cam 49 has been increased, such cam being obtained inside the ring-nut knob 11: the section arrangement is different and greater than the circular section of the prior art cam. Obviously, it is possible to adopt any other cross sectional shape of the cam 49.

In order to improve the resistance to bending when extracting the inventive connector 1, the pouring member 4 has been equipped with a small plate 50 which distributes the forces that are created when the connector 1 is subjected to a rightward and leftward waving movement when removing the outlet pipe (not shown).

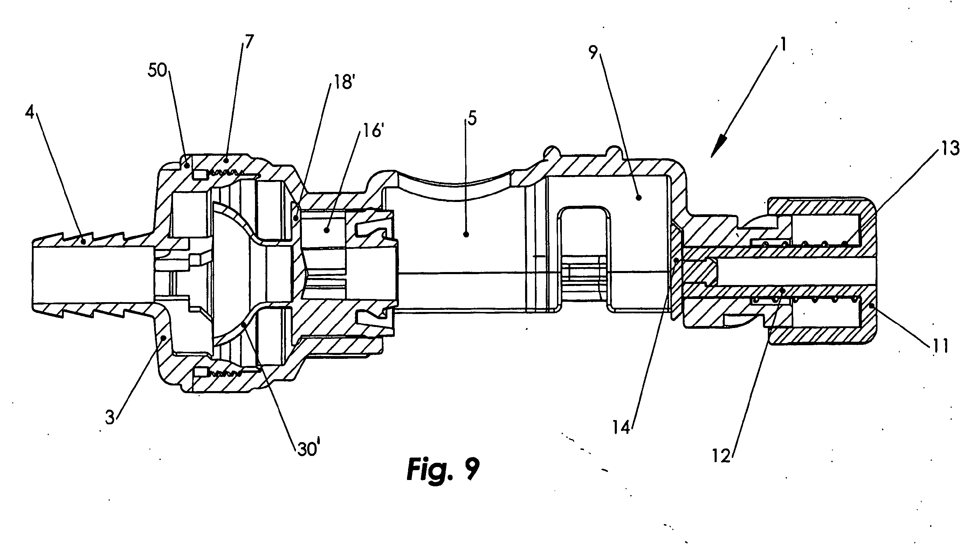

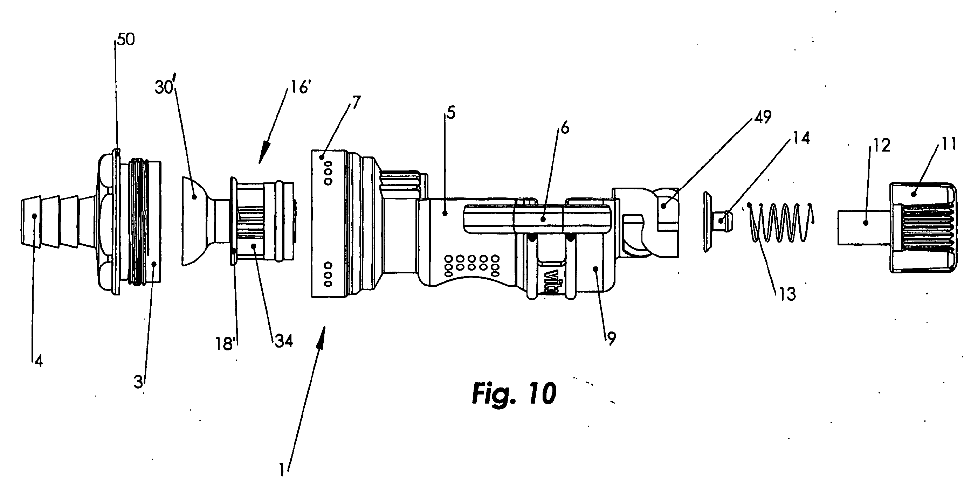

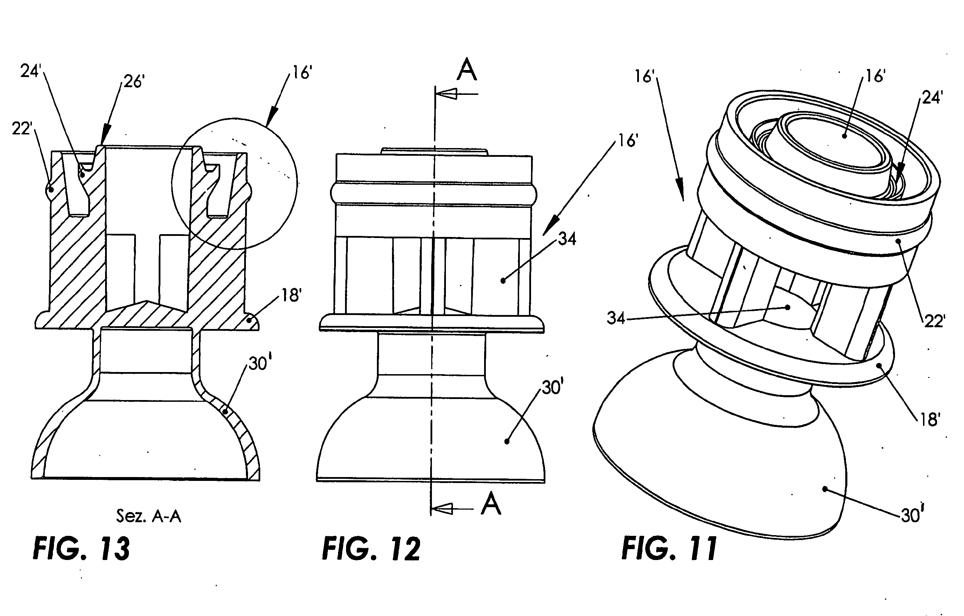

Figures 9 to 14 show a second preferred embodiment of the present invention: the parts which are identical to those of the previously described embodiment are assigned the same reference numbers, and their description will not be repeated.

The two main differences between the first and the second embodiment of the inventive connector 1 therefore are:
- a check valve 16' placed inside the body 5, also equipped with a circular end 18' adapted to engage a corresponding internal wall 20 of the pouring member 3 to perform the liquid seal between pouring member 3 and valve 16'; the valve 16' is further equipped with three integral shapes projections 22', 24', 26' adapted to operate as liquid sealing gaskets when opening and/or removing the tap from the connector 1; and
- elastic pushing means 30 shaped as a dome and integrally connected to the check valve 16', in which such elastic means 30 are adapted to push the valve 16' in its closing position on the pouring member 3 and are adapted to prevent liquid from going out of the connector 1 when removing the tap from the connector 1.

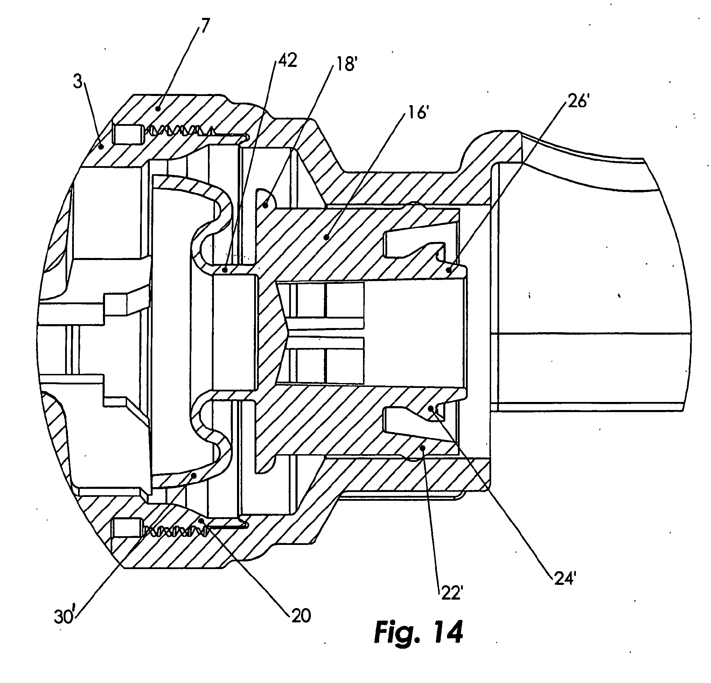

In this way, the removal of the spring 28 is allowed, whose function is performed by the elastic means 30 integrated with the valve 16', obtaining, when the connector is opened, the situation shown in Fig. 14, in which one can see in 42 the elastic distortion point of the elastic means 30 and in 44 the tap pushing point.

Some preferred embodiments of the present invention have been previously shown and described: obviously, numerous variations and modifications, functionally equivalent to the previous ones, which falls within the scope of the invention as pointed out by the enclosed claims, will readily appear to the skilled people in the art. For example, according to another embodiment, not shown, the pushing member 14 and the cylindrical end 12 can be moulded in a single piece, further reducing the number of parts and the final cost of the inventive connector.

## Claims

1. Connector (1) for a delivering tap, particularly for a tap of a vessel of the "bag in box" type for liquids, comprising:
- a pouring member (3);
- an elongated body (5) connected at one end (7) to said pouring member (3) and adapted, at an opposite end (9), to engage a delivering tap in order to open it;
- a knob (11) connected to the end (9) of said body (5) and adapted to allow opening of said tap engaged by the connector (1), said knob (11) being equipped with a cylindrical end (12) around which a first spring (13) is placed, said cylindrical end (12) ending in a pushing member (14) adapted to push said tap in its opening position;
- a check valve (16) placed inside said body (5); and
- at least one second pushing spring (28) for said check valve (16) adapted to push said valve (16) in its closing position on said pouring member (3) and adapted to prevent liquid from going out of said connector (1) when removing said tap from said connector (1);
**characterised in that** said check valve (16) is equipped with a circular end (18) adapted to engage a corresponding internal wall (20) of said pouring member (3) for performing a liquid seal between pouring member (3) and valve (16), said valve (16) being further equipped with three integral shaped projections (22, 24, 26) adapted to operate as liquid sealing gaskets when opening and/or removing said tap from said connector (1).

2. Connector (1) for a delivering tap, particularly for a tap of a vessel of the "bag in box" type for liquids, comprising:
- a pouring member (3);
- an elongated body (5) connected at one end (7) to said pouring member (3) and adapted, at an opposite end (9), to engage a delivering tap in order to open it;
- a knob (11) connected to the end (9) of said body (5) and adapted to allow opening of said tap engaged by the connector (1), said knob (11) being equipped with a cylindrical end (12) around which a first spring (13) is placed, said cylindrical end (12) ending in a pushing member (14) adapted to push said tap in its opening position; and
- a check valve (16') placed inside said body (5),
**characterised in that** said check valve (16') is equipped with a circular end (18') adapted to engage a corresponding internal wall (20) of said pouring member (3) for performing a liquid seal between pouring member (3) and valve (16'), said valve (16') being further equipped with three integral shaped projections (22', 24', 26') adapted to operate as liquid sealing gaskets when opening and/or removing said tap from said connector (1); and
**in that** it further comprises elastic pushing means (30') shaped as a dome and integrally connected to said check valve (16'), said means (30') being adapted to push said valve (16') to its closing position on said pouring member (3) and being adapted to prevent liquid from going out of said connector (1) when removing said tap from said connector (1).

3. Connector (1) according to claim 1, **characterised in that** said second spring (28) abuts onto said pouring member (3) on corresponding projections (30) obtained next to the outlet orifice (32) of said pouring member (3).

4. Connector (1) according to claim 1 or 2, **characterised in that** said pouring member (4) is further equipped with a small plate (50) adapted to distribute the forces which are created when said connector (1) is subjected to a rightward and leftward waving movement when removing an outlet pipe from said connector (1).

5. Connector (1) according to claim 1 or 2, **characterised in that** said knob (11) is equipped inside with a cam (49) with a cross-sectional geometry that is greater than a circular geometry.

## Patentansprüche

1. Anschluss (1) für einen Versorgungshahn, besonders für den Hahn eines Flüssigkeitsbehälters Typ "bag in box", mit:
- einem Ausgießerelement (3);
- einem länglichen Körper (5), der an einem Endstück (7) mit dem genannten Ausgießerelement (3) verbunden ist und dazu dient, am entgegen gesetzten Endstück (9) einen Versorgungshahn zu spannen, um ihn zu öffnen;
- einem Griff (11), der mit dem Endstück (9) des genannten Körpers (5) verbunden ist und dazu dient, die Öffnung des genannten Hahns zu ermöglichen, der vom Anschluss (1) gespannt wird, der genannte Griff (11) ist mit einem zylinderförmigen Endstück (12) ausgestattet, an dem eine erste Feder (13) angebracht ist, das genannte zylinderförmige Endstück (12) endet in einem Druckelement (14), das dazu dient, den genannten Hahn in seine Öffnungsposition zu schieben;
- einem Rückschlagventil (16), das in dem genannten Körper (5) angebracht ist; und
- mindestens einer zweiten Druckfeder (28) des genannten Rückschlagventils (16), die dazu dient, das genannte Ventil (16) in seiner Verschlussposition an das genannte Ausgießerelement (3) zu schieben, das dazu dient, in der Abnahmephase des genannten Hahns vom genannten Anschluss (1) das Herauslaufen der Flüssigkeit aus dem genannten Anschluss (1) zu verhindern;
und **dadurch gekennzeichnet ist, dass** das genannte Rückschlagventil (16) mit einem kreisförmigen Endstück (18) ausgestattet ist, das dazu dient, eine entsprechende Innenwand (20) des genannten Ausgießerelements (3) zu spannen, um die Flüssigkeitsdichte zwischen dem Ausgießerelement (3) und dem Ventil (16) zu erhalten, das genannte Ventil (16) ist außerdem mit drei gleichen vollständigen Auskragungen (22, 24, 26) ausgestattet, die in der Öffnungs- und/oder Auszugsphase des genannten Hahns vom genannten Anschluss (1) als Flüssigkeitsdichtungen dienen.

2. Anschluss (1) für einen Versorgungshahn, besonders für den Hahn eines Flüssigkeitsbehälters Typ "bag in box", mit:
- einem Ausgießerelement (3);
- einem länglichen Körper (5), der an einem Endstück (7) mit dem genannten Ausgießerelement (3) verbunden ist und dazu dient, am entgegen gesetzten Endstück (9) einen Versorgungshahn zu spannen, um ihn zu öffnen;
- einem Griff (11), der mit dem Endstück (9) des genannten Körpers (5) verbunden ist und dazu dient, die Öffnung des genannten Hahns zu ermöglichen, der vom Anschluss (1) gespannt wird, der genannte Griff (11) ist mit einem zylinderförmigen Endstück (12) ausgestattet, an dem eine erste Feder (13) angebracht ist, das genannte zylinderförmige Endstück (12) endet in einem Druckelement (14), das dazu dient, den genannten Hahn in seine Öffnungsposition zu schieben; und
- einem Rückschlagventil (16'), das in dem genannten Körper (5) angebracht ist,
und **dadurch gekennzeichnet ist, dass** das genannte Rückschlagventil (16') mit einem kreisförmigen Endstück (18') ausgestattet ist, das dazu dient, eine entsprechende Innenwand (20) des genannten Ausgießerelements (3) zu spannen, um die Flüssigkeitsdichte zwischen dem Ausgießerelement (3) und dem Ventil (16) zu erhalten, das genannte Ventil (16') ist außerdem mit drei gleichen vollständigen Auskragungen (22', 24', 26') ausgestattet, die in der Öffnungs- und/oder Auszugsphase des genannten Hahns vom genannten Anschluss (1) als Flüssigkeitsdichtungen dienen; und
**dadurch**, außerdem elastische Druckvorrichtungen (30') in Form einer Kuppel zu enthalten, die im genannten Rückschlagventil (16') eingebaut sind, die genannten Vorrichtungen (30') dienen dazu, das genannte Ventil (16') am genannten Ausgießerelement (3) in seine Verschlussposition zu schieben und das Herauslaufen der Flüssigkeit aus dem genannten Anschluss (1) in der Abnahmephase des genannten Hahns vom genannten Anschluss (1) zu verhindern.

3. Anschluss (1) gemäß Patentanspruch 1, der **dadurch gekennzeichnet ist, dass** die genannte zweite Feder (28) am genannten Ausgießerelement (3) an entsprechenden Vorsprüngen (30) abgestützt ist, die an der Ausgangsöffnung (32) des genannten Ausgießerelements (3) angebracht wurden.

4. Anschluss (1) gemäß Patentanspruch 1 oder 2, der **dadurch gekennzeichnet ist, dass** das genannte Ausgießerelement (4) außerdem mit einem Teller (50) ausgestattet ist, der dazu dient, die Kräfte zu verteilen, die erzeugt werden, wenn eine wellenförmige Bewegung von rechts nach links in der Abnahmephase eines Ausgangsrohres an den genannten Anschluss (1) übertragen wird.

5. Anschluss (1) gemäß Patentanspruch 1 oder 2, der **dadurch gekennzeichnet ist, dass** der genannte Griff (11) intern mit einem Nocken (49) mit einer Querschnittsgeometrie ausgestattet ist, die besser als eine kreisförmige Geometrie ist.

## Revendications

1. Connecteur (1) pour un robinet verseur, en particulier pour le robinet d'un conteneur de liquides du type "bag in box", comprenant:
- un élément verseur (3);
- un corps allongé (5) relié à une extrémité (7) dudit élément verseur (3) et capable, à l'extrémité opposée (9), d'engager un robinet verseur pour l'ouvrir;
- une prise d'ouverture (11) reliée à une extrémité (9) dudit corps (5) et capable de permettre l'ouverture dudit robinet engagé par le connecteur (1), cette prise d'ouverture (11) étant munie d'une extrémité cylindrique (12) autour de laquelle est positionné un premier ressort (13), ladite extrémité cylindrique (12) se terminant en un élément de poussée (14) pouvant pousser ledit robinet dans sa position d'ouverture;
- un clapet de non-retour (16) placé à l'intérieur dudit corps (5); et
- au moins un second ressort (28) de poussée dudit clapet de non-retour (16) pouvant pousser ledit clapet (16) dans sa position de fermeture sur ledit élément verseur (3) et en mesure d'empêcher l'échappement du liquide au niveau dudit connecteur (1) lors de l'extraction dudit robinet de ce connecteur (1);
**caractérisé en ce que** ledit clapet de non-retour (16) est muni d'une extrémité circulaire (18) capable d'engager une paroi interne (20) correspondant dudit élément verseur (3) pour effectuer l'étanchéité du liquide entre l'élément verseur (3) et le clapet (16), ledit clapet (16) possédant encore trois proéminences intégrales conformées (22, 24, 26) pouvant servir de bagues étanches du liquide en phase d'ouverture et/ou d'extraction dudit robinet de ce connecteur (1).

2. Connecteur (1) pour un robinet verseur, en particulier pour le robinet d'un conteneur de liquides du type "bag in box", comprenant:
- un élément verseur (3);
- un corps allongé (5) relié à une extrémité (7) dudit élément verseur (3) et capable, à l'extrémité opposée (9), d'engager un robinet verseur pour l'ouvrir;
- une prise d'ouverture (11) reliée à une extrémité (9) dudit corps (5) et capable de permettre l'ouverture dudit robinet engagé par le connecteur (1), cette prise d'ouverture (11) étant munie d'une extrémité cylindrique (12) autour de laquelle est positionné un premier ressort (13), ladite extrémité cylindrique (12) se terminant en un élément de poussée (14) pouvant pousser ledit robinet dans sa position d'ouverture; et
- un clapet de non-retour (16') placé à l'intérieur dudit corps (5);
**caractérisé en ce que** ledit clapet de non-retour (16') est muni d'une extrémité circulaire (18') capable d'engager une paroi interne (20) correspondant dudit élément verseur (3) pour effectuer l'étanchéité du liquide entre l'élément verseur (3) et le clapet (16'), ledit clapet (16') possédant encore trois proéminences intégrales conformées (22', 24,' 26') capable d'agir comme bagues étanches du liquide en phase d'ouverture et/ou d'extraction dudit robinet de ce connecteur (1); et
**en ce qu'**il comprend en plus des moyens élastiques de poussée (30') en forme de coupole et reliés de manière intégrale au clapet de non-retour (16'), lesdits moyens (30') pouvant pousser ledit clapet (16') dans sa position de fermeture sur ledit élément verseur (3) et pouvant empêcher l'échappement du liquide au niveau dudit connecteur (1) lors de l'extraction dudit robinet de ce connecteur (1);

3. Connecteur (1) selon la revendication 1, **caractérisé en ce que** ledit second ressort (28) vient s'appuyer sur ledit élément verseur (3) sur des proéminences correspondantes (30) présentes à proximité de l'orifice de sortie (32) dudit élément verseur (3).

4. Connecteur (1) selon la revendication 1 ou 2, **caractérisé en ce que** ledit élément verseur (4) est encore muni d'une platine (50) capable de répartir les forces créées lorsqu'on imprime audit connecteur (1) un mouvement ondulatoire à droite et à gauche lors de l'extraction d'un tuyau de sortie dudit connecteur (1).

5. Connecteur (1) selon la revendication 1 ou 2, **caractérisé en ce que** ladite prise d'ouverture (11) possède à l'intérieur une came (49) à géométrie de section transversale qui est supérieure à une géométrie circulaire.
